# EUROPÄISCHE PATENTSCHRIFT

(11) **EP 2 048 554 B1**
(45) Veröffentlichungstag und Bekanntmachung des Hinweises auf die Patenterteilung: **24.02.2010**
(21) Anmeldenummer: 08017617.5
(22) Anmeldetag: 08.10.2008
(51) Int. Cl.: G05B 19/042, G06F 17/50

(54) **Verfahren zur Simulation eines Elektromotors oder Generators**
Method for simulating an electric motor or generator
Méthode pour simuler un moteur électrique ou un générateur

(30) Priorität: 29.10.2007 DE 102007051908; 10.10.2007 DE 102007048770
(43) Veröffentlichungstag der Anmeldung: 15.04.2009
(73) Patentinhaber: Silver Atena Electronic Systems Engineering GmbH, 80995 München (DE)
(72) Erfinder: Ciceri, Alessandro, 39040 Pfitsch (IT); Schwamm, Friedrich, 85604 Zorneding (DE)
(74) Vertreter: Kempkens, Anke

(56) Entgegenhaltungen:
- EP-A- 1 755 210
- US-A- 4 751 443
- HANSELMANN H: "REAL-TIME SIMULATION REPLACES TEST DRIVES" TEST AND MEASUREMENT WORLD, REED BUSINESS INFORMATION, HIGHLANDS RANCH, CO, US, Bd. 16, Nr. 3, 15. Februar 1996 (1996-02-15), Seite 35/36,38,40, XP000559454 ISSN: 0744-1657

## Beschreibung

Die vorliegende Erfindung betrifft ein Verfahren zur Simulation der Wirkung eines Bauelementes an einem Steuergerät, wobei das Bauelement einen Stromfluss entsprechend einer elektrischen Last hervorrufen würde.

Bei der Steuergeräte-Implementierung wird in der Regel ein Regelalgorithmus auf ein in der Praxis einzusetzendes Steuergerät übertragen. Üblicherweise folgt daraufhin die Durchführung von Testfahrten und Testprozeduren, die auch unter extremen Bedingungen stattfinden muss, um Funktionssicherheit nachzuweisen. Diese Testszenarien werden vorteilhafterweise auf Simulatoren durchgeführt. D.h. das entwickelte reale Steuergerät wird anhand einer simulierten Testumgebung getestet. Dieses Vorgehen wird Hardware-In-the-Loop (HIL) Prozess genannt.

Ein Anwendungsgebiet eines solchen Verfahrens liegt in der Simulation von elektromotorischen Aktuatoren beispielsweise bei sogenannten leistungsoptimierten Flugzeugen (Power Optimized Aircraft).

Ein weiteres Anwendungsgebiet eines solchen Verfahrens liegt in der Design-Verifikation von Hybridantrieben im Auto. Hierbei wird entweder eine Simulation verwendet, bei der entweder kein Motor/Generatorstrom fliesst oder aber ein realer Elektromotor über seine Welle an einem zweiten Elektromotor gekoppelt ist und mit diesem das Drehmoment der Kurbelwelle simuliert wird. Beim Einsatz des realen Motors wird auch bei generatorischer Rückspeisung in das Netz eine Heizleistung vom Netz gezogen, die mehr als doppelt so groß ist wie die aktuelle Verlustleistung des realen Elektromotors vom Hybridantrieb.
Dadurch dass bei der vorliegenden Simulation keine Umwandlung von elektrischer in mechanische Energie und umgekehrt erfolgt, kann hier die anfallende Heizleistung auf ein Minimum gedrückt werden. Sie kann speziell bei großer Aussteuerung des Motors durch eine EMK-Verfälschung zur Simulation des Wicklungswiderstandes sogar deutlich kleiner werden als die Verlustleistung, die der reale Elektromotor alleine haben würde. Bei Motoren in einer Leistungsklasse von mehr als 50kW ist es daher technisch sehr anspruchsvoll diese Simulatoren in einer Laborumgebung zu realisieren. Ausserdem müssen Vorkehrungen getroffen werden, durch die die an der Simulation arbeitenden Entwickler vor einem Besten der Motoren geschützt werden.

Demgegenüber wird gemäß neuerem Stand der Technik (DE 10 2005 048 464) ein Verfahren zur Simulation der Wirkung einer elektrischen Last, insbesondere einer induktiven Last an einem Anschluss eines Steuergerätes dadurch bewerkstelligt, dass ein theoretisch durch die simulierte Last fließender Strom dadurch real nachgebildet wird, dass mittels einer mit dem Anschluss verbundenen ansteuerbaren Stromeinheit ein Strom dem Steuergerät entnommen oder aufgeprägt wird. Dadurch können schnelle Schaltzeiten erreicht werden (1 Mikrosekunde und besser), wodurch eine realistische Stromnachbildung erzielt wird. Ausserdem entfällt das Umrüsten von Reallasten. Auch die gute Skalierbarkeit der verschiedenen Parameter ist gegeben. Zudem können so hohe Stromlasten simuliert werden, wie sie insbesondere bei Antriebstrangtechnologien, wie beispielsweise bei dem Test von Hybridantrieben vorkommen, simuliert werden.

Allerdings kann damit nur eine grobe Approximation einer elektrischen Maschine nachgebildet werden, mit der beispielsweise Feldschwächeffekte im motorischen oder generatorischen Betrieb dieser Maschine nicht möglich sind. Damit können dann wesentliche Effekte beim Einsatz von größeren permanent-magnetisch erregten Drehfeldmaschinen, wie sie in Hybridantrieben von Autos eingesetzt werden, nicht simuliert werden.

Es ist daher die Aufgabe der vorliegenden Erfindung, ein Verfahren anzugeben, gemäß dem, ohne dass rotierende Komponenten eingesetzt werden müssen, ein Steuergerät in Bezug auf die fliessenden Ströme so betrieben werden kann wie am realen Motor. Ein weiteres Ziel der vorliegenden Erfindung liegt darin, ein Verfahren anzugeben, gemäß welchem eine Energie-Rückspeisung in den Gleichspannungs-Zwischenkreis erfolgt, wodurch nahezu ohne Zusatz-Aufwand nur mehr die Verlustleistung des simulierten Motors vom Netz gezogen werden muss.

Mit einem erfindungsgemäßen Verfahren können Exemplarsteuerungen und Fehlermodi von Motoren per Software eingestellt werden. Die einstellbare Bandbreite für Exemplarsteuerungen ist dabei groß genug, um auch ein sehr breites Spektrum von Motoren abdecken zu können. Mit dem erfindungsgemäßen Verfahren kann jeder Typ einer Drehfeld-Maschine in der aufbauabhängigen Leistungsklasse abgedeckt werden.

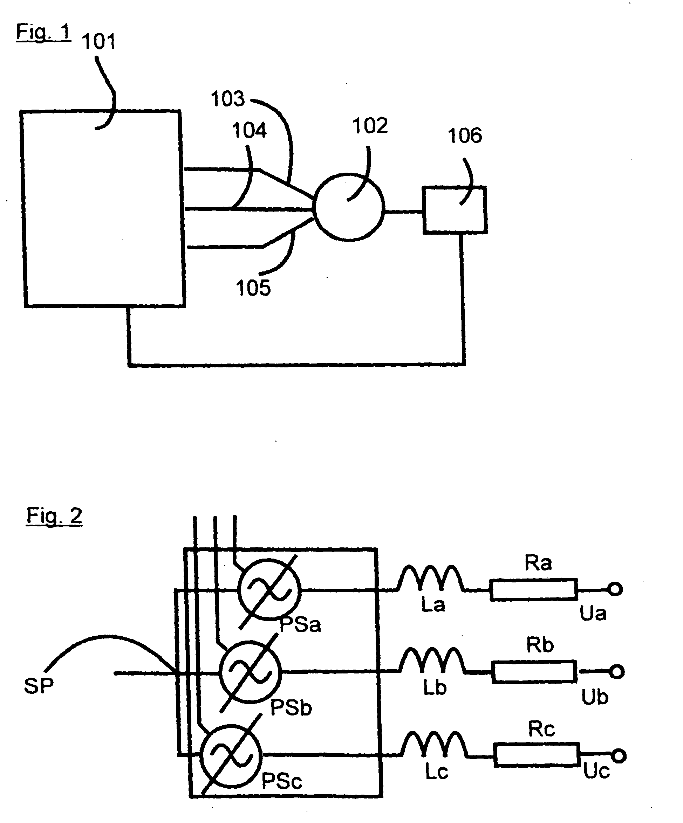

Die Aufgabe wird erfindungsgemäß dadurch gelöst, dass ein zu testendes Steuergerät an eine Motornachbildung angeschlossen wird, wobei die Motornachbildung einen erste Komponentenkomplex und einen zweiten Komponentenkomplex umfasst. Im ersten Komponcntenkomplex wird die Steuerung, Regelung und Überwachung der Motornachbildung übernommen, im zweiten Komponentenkomplex wird anhand von 3 Wicklungssträngen der eigentliche Gleichstrommotor simuliert. Die Rückspeisung der während der Simulation fliessenden Ladungsträger in die Spannungsquelle erlaubt die Reduktion des Stromverbrauchs auf die realen Verluste der Simulation. cic
Figur 1 zeigt beispielhaft den Aufbau eines mit einem Gleichstrommotor in Verbindung stehenden Steuergerätes 101 gemäß dem Stand der Technik.

Dabei liegen bei einem solchen Motor 102 drei Wicklungen vor, Von jeder Wicklung ist jeweils ein Ende über Leitungen 103, 104 und 105 zugänglich, während die anderen Enden intern zu einem Sternpunkt zusammengeschaltet sind.
Obwohl bei der Erfindung die Wicklungen vom Hardware-Aufbau auf einen Sternpunkt laufen, lassen sich auch Maschinen mit Dreieeks-Schaltung, wie sie speziell zur Steigerung der installierten Leistungsdichte verwendet werden, durch eine Umschaltung in der Modell-Software realisieren.

Die zugänglichen Enden werden mit einem Steuergerät 101, d.h. mit den dort jeweils dafür vorgesehenen Anschlüssen verbunden. Das Steuergerät 101 versorgt den Gleichstrommotor 102 mit Spannung. Zur Steuerung der Kommutierung benötigt das Steuergerät 101 die Winkelposition des Rotors. Bei der Erfindung kann diese Position entweder von der Simulation selbst oder von einem externen Element vorgegeben werden. Das Signal der Winkelposition wird so konditioniert, dass es dem eingesetzten Positionsgebers 106 entspricht und dem Steuergerät zugeführt wird. Aus der Winkelposition berechnet das Steuergerät die entsprechenden PWM-Spannungen mit deren Hilfe die Drehfeldmaschine mit Spannung so über die Anschlüsse 103, 104, und 105 versorgt wird, dass sie mit optimalem Drehmoment betrieben wird. D.h. über die Leitungen 103, 104, und 105 erhält jede Wicklung der Drehfeldmaschine eine Klemmenspannung, wie dies zur Ansteuerung von solchen Motoren/Generatoren üblich ist.

Wie in Figur 2 dargestellt, lässt sich jede Wicklung i, i=a, b, c durch ein Ersatzschaltbild modellieren. Dieses Ersatzschaltbild setzt sich aus einer Wicklungsinduktivität Li einem Wicklungswiderstand Ri und einer Spannungsquelle PSi, die jeweils eine Regelungsspannung liefert, zusammen. Die Regelungsspannung simuliert in jedem Wicklungsstrang i die induzierte Gegenspannung in der Wicklung i.

Der Spannungsabfall an den drei Komponenten muss addiert die PWM-Spannung Ui ergeben.

Die der vorliegenden Erfindung zugrunde liegende Aufgabe wird nun dadurch gelöst, dass, um die Größe der Regelungsspannung richtig einzustellen, ein Ist-Soll Vergleich vollzogen wird. Die Regelungsspannung Uei_st muss ein Abweichen der Summe des Spannungsabfalls am Widerstand Ri und an der Spule Li von der entsprechenden Polradspannung kompensieren. Die Polradspannung bildet daher den Istwert. Der dazugehörige Sollwert wird, aus der Polradspannung des Motormodells gebildet, in das sowohl die vom Steuergerät ausgegebene Klemmenspannung als auch die Rotorposition und die Rotordrehzahl als Eingangssignale verwendet. Dabei wird im Modell berücksichtigt, dass bei dieser Maschinen-Nachbildung für Wicklungsinduktivität und -Widerstand reale Komponenten eingesetzt werden über die der Wicklungsstrom fließt.

Die Polradspannung wird gemäß einer Ausführungsform der vorliegenden Erfindung dadurch ermittelt, dass das Luftspaltmoment des zu simulierenden Motors mittels der Klemmspannung des Motors mit Hilfe eines Motormodells berechnet wird, das Luftspaltmoment einem Fahrzeugmodell zugeführt wird und über das Widerstandsmoment und die Schwungmasse die aktuelle Rotorposition und Rotordrehzahl berechnet wird. Aus diesen Parametern wird dann unter Berücksichtigung der Klemmspannung die Polradspannung des Motors bestimmt. Die Rotorposition könnte jedoch auch von einem realen Sensor geliefert werden.

Gemäß einem weiteren Aspekt der vorliegenden Erfindung wird erreicht, dass vom Netz nur diejenige Leistung genommen werden muss, die zur Abdeckung der Verluste benötigt wird. Dies wird dadurch erzielt, dass an der Leistungs-Endstufe, mit der die Polradspannung des Motors nachgebildet wird, primärseitig ein Gleichspannungszwischenkreis und sekundärseitig ein Drehstromkreis vorgesehen wird und dadurch sowohl von der Primär- zur Sekundärseite als auch umgekehrt elektrische Energie verschoben werden kann.

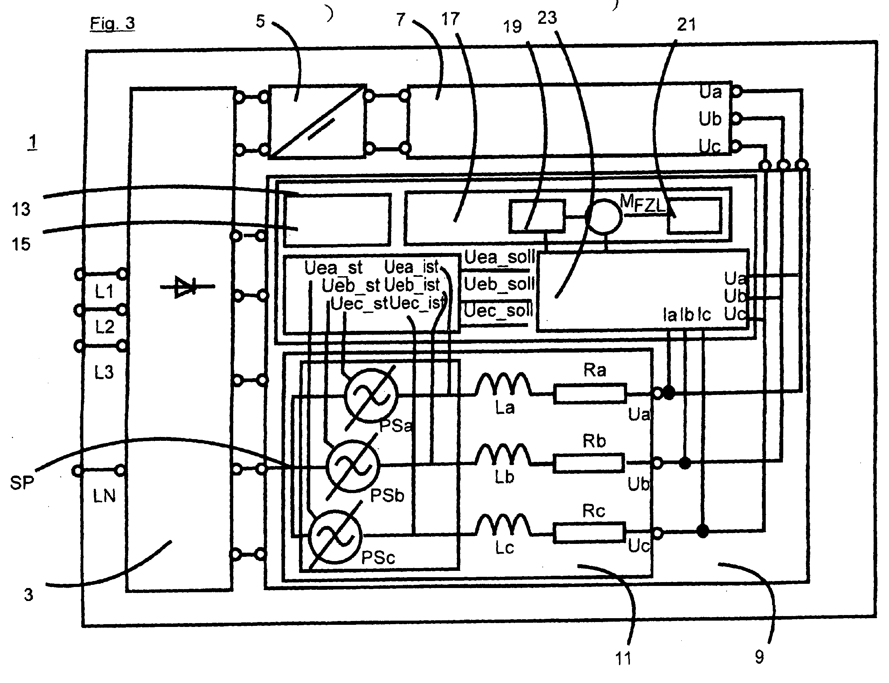

Die Erfindung wird nun im Detail anhand eines in der Figur 3 gezeigten Ausführungsbeispiels dargestellt.

In Figur 3 ist ein Übersichtsschema zu den Komponenten für die Motornachbildung gezeigt. Das Testsystem 1 umfasst ein Netzteil 3 (PSU = power supply unit), eine DC//DC Schranke 5, das zu testende Steuergerät 7 (UUT = Unit under Test) und eine Motornachbildung 9. Die Motornachbildung 9 umfasst einen ersten Komponentenkomplex 11 und einen zweiten Komponentenkomplex 13. Im ersten Komponentenkomplex 11 sind die Ersatzkomponenten der Drehstromwicklung vereinigt. Gezeigt sind drei Wicklungsstränge mit jeweils einem separaten Anschluss Uₐ, U_{b} und U_{c}. Jeder Wicklungsstrang i umfasst in Reihe geschaltet einen Widerstand Ri, eine Indutkivität Li und eine Spannungsquelle PSi mit Spannung Uei, wobei i=a,b,c. Die Spannungsquellen PSa, PSb, PSc haben einen zu einem Sternenpunkt SP zusammengeschlossenen Ausgang.

Im zweiten Komponentenkomplex 13 sind die Komponenten zur Steuerung, Regelung und Überwachung der Motornachbildung vereinigt. Dieser Komponentenkomplex 13 umfasst eine Steuerung 15, die mit der DC//DC-Schranke 5 verbunden ist und ein Hoch-Volt Boardnetz realisiert. Der Komponentenkomplex 13 umfasst ausserdem das Simulationsmodel 23 der elektrischen Strecke des Elektromotors: Ausserdem umfasst der Komponentenkomplex 13 den OEM-Anteil 17 des Simulationsmodels des Fahrzeugs, in dem die mechanische Strecke 19 aus Kombination der Daten vom Simulationsmodel 23 und M_{FZL} des Auto Lastmomentes bzw. Antriebsmoments 21 eingespeist wird. Auf diese Weise wird der Missmatch zwischen Ansteuerung und Motorreaktion, der zu einer unerwünschten Feldschwächung oder Feldstärkung führen kann, kompensiert. Ausserdem umfasst der Komponentenkomplex 13 den Stellsignalregler.

Beim Verfahren gemäß der Vorliegenden Erfindung werden die Ausgangsspannungen Uₐ, U_{b}, U_{c} des zu testenden Steuergerätes 7 an die entsprechenden Eingänge des Komponentenkomplexes 11 und des Komponentenkomplexes 13 angeschlossen. Mit dem Simulationsmodel 23 der elektrischen Strecke des Elektromotors werden dann auf der Basis der Ausgangsspannungen Ua, Ub, Uc und der in den Wicklungssträngen fliessenden Ströme Ia, Ib, Ic die Soll-Spannungen Uea_soll, Ueb_soll, Uec_soll als Referenzwerte für den Stellsignalregler berechnet. Der Stellsignalregler greift für jeden Wicklungsstrang i die jeweils am Widerstand Ri und an der Induktivität Li abfallende Spannung Uei_ist ab und ermittelt über einen Ist-Soll-Vergleich die über die Spannungsquelle PSi einzuspeisende Regelungsspannung Uei_st um den Ist-Wert auf den Sollwert einzuregeln.

Die Spannung vom Sternenpunkt SP wird schliesslich wiederum mit der PSU 3 verbunden. Durch die in der Figur 3 gezeigte Ausführungsform der vorliegenden Erfindung wird erreicht, dass eine Simulation eines Elektromotors realisiert wird, bei der sich nichts dreht und das Motorsteuergerät so betrieben werden kann, wie am echten Motor. Darüber hinaus kann mit diesem Konzept eine generatorische Rückspeisung in den Gleichspannungs-Zwischenkreis erfolgen, wodurch nur mehr die Verlustleistung des 'simulierten' Motors vom Netz gezogen werden muss. Diese Heizleistung beträgt damit nur mehr etwa 10% der aktuellen Motor- bzw. Generator-Leistung, bei der Simulation eines 50kW-Motors also etwa 5kW und nicht >55 kW.
Desweiteren können damit Exemplarsteuerungen und Fehlermodi des Motors per Software eingestellt werden. Die einstellbare Bandbreite für Exemplarsteuerungen ist groß genug, um auch ein relativ breites Spektrum von Motoren damit abdecken zu können. Es ist sogar möglich jeden Typ einer Drehfeld-Maschine in der aufbauabhängigen Leistungsklasse damit abdecken zu können. Bis zu 500kW sollte möglich sein.

## Patentansprüche

1. Verfahren zur Simulation der Wirkung wenigstens einer elektrischen/elektronischen Last insbesondere einer induktiven Last an einem Anschluss eines Steuergerätes (7), bei dem:
- eine Drehfeldmaschine (9) über drei Wicklungsstränge (a,b,c) simuliert wird mit jeweils einer Wicklungsinduktivität (La, Lb, Lc,) jeweils einem Wicklungswiderstand (Ra, Rb, Rc) und jeweils einer Spannung (Uₑₐ, U_{eb}, U_{ec}) eines EMK-Reglers,
wobei das Stellsignal des Reglers jeweils auf eine Leistungsendstufe (PSa, PSb, PSc) geht, mit der die Gegenspannung für jeden Wicklungsstrang separat gebildet wird und die Spannungen (Dₑₐ, U_{eb}, U_{ec}) jeweils zum Abgleich der aus Wicklungswiderstand und Wicklungsinduktivität resultierenden Ist-Spannungswerte (U_{ist,a}, U_{ist,b}, U_{ist,c}) mit den Soll-Spannungswerten (U_{soll,a}, U_{soll,b}, U_{soll,c}) geregelt werden, wobei die aktuellen Soll-Spannungswerte auf der Basis der Ausgangsspannungen des zu testenden Steuergerätes und der in den Wicklungssträngen fliessenden Ströme (Ia, Ib, Ic) ermittelt werden, **dadurch gekennzeichnet, dass** zu Ermittlung der Soll-Spannungswerte
- das Luftspaltmoment der zu simulierenden Drehfeldmaschine (9) mittels der Klemmspannung der Drehfeldmaschine (9) mit Hilfe eines Modells der Drehfeldmaschine (9) berechnet wird,
- das Luftspaltmoment einem Fahrzeugmodell zugeführt wird und über das Widerstandsmoment und die Schwungmasse die aktuelle Rotordrehzahl und/oder Rotorposition berechnet wird und aus diesen Parametern unter Berücksichtigung der Klemmspannung die Polradspannung (EMK) der Drehfeldmaschine (9) bestimmt wird, welche als Soll-Spannungswert verwendet wird.

2. Verfahren nach Anspruch 1, **dadurch gekennzeichnet, dass** an der Leistungs-Endstufe, mit der die Polradspannung der Drehfeldmaschine (9) nachgebildet wird, primärseitig ein Gleichspannungszwischenkreis und sekundärseitig ein Drehstromkreis vorgesehen wird und dadurch sowohl von der Primär- zur Sekundärseite als auch umgekehrt elektrische Energie verschoben werden kann.

## Claims

1. Method for simulating the effect of at least one electric/electronic load, in particular an inductive load, on a convection of a control unit (7), in which:
- an induction machine (9) is simulated over three winding branches (a, b, c) each with a winding inductance (L'a, Lb, L,c), a winding resistor (Ra, Rb, Rc) and a voltage (Uea, Ueb, Uec) of an EMF regulator,
wherein the output signal of the regulator in each case goes to a power end stage (PSa, PSb, PSc) with which the countervoltage for each winding branch is formed separately and the voltages (Uₑₐ, U_{eb}, Uₑₑ) are in each case regulated to adjust the actual voltage values (U_{ist,a}, U_{ist,b}, U_{ist,c}) resulting from the winding resistor and winding inductance to the demand voltage values (U_{soll,a}, U_{soll,b}, U_{soll,c},), wherein the actual demand voltage values are determined on the basis of the output voltages of the control unit to be tested and the currents (Ia, Ib, Ic) flowing into the winding branches, **characterised in that** to determine the demand voltage values
- the air gap moment of the induction machine (9) to be simulated is calculated via the terminal voltage of the induction machine (9) using a model of the induction machine (9),
- the air gap moment is transmitted to a vehicle model and via the resistance moment and centrifugal mass, the current rotor rotation speed and/or rotor position is calculated, and from these parameters taking into account the terminal voltage, the pole wheel voltage (EMF) of the induction machine (9) is determined which is used as the demand voltage value.

2. Method according to claim 1, **characterised in that** at the power end stage with which the pole wheel voltage of the induction machine (9) is simulated, on the primary side a direct voltage intermediate circuit and on the secondary side a three-phase current circuit are provided, and thus electrical energy can be displaced both from the primary to the secondary side and conversely.

## Revendications

1. Procédé de simulation de l'action d'au moins une charge électrique/électronique, notamment d'une charge inductive, au niveau d'une connexion d'un organe de commande (7), dans lequel :
- on simule une machine à induction à champs tournants (9) par trois conducteurs de phase (a, b, c) qui comporte chacun une inductance d'enroulement (La, Lb, Le), une résistance d'enroulement (Ra, Rb, Rc) et une tension (Uₑₐ, U_{eb}, U_{ec}) d'un régulateur de force électromotrice (f.e.m), le signal de commande du régulateur étant appliqué à chaque fois à un étage de puissance (PSa, PSb, PSc) au moyen duquel on forme séparément la contre-tension pour chaque conducteur de phase et on régule les tensions (Uₑₐ, U_{eb}, U_{ec}) avec les valeurs de tension de consigne (U_{soll,a}, U_{soll,b}, U_{soll,c}) c) afin de régler respectivement les valeurs de tension réelles (U_{ist,a}, U_{ist,b}, U_{ist,}c) dues à la résistance d'enroulement et à l'induction d'enroulement, les valeurs de tension de consigne actuelles étant déterminées en se fondant sur les tensions de sortie de l'appareil de commande à tester et sur les courants (la, Ib, Ic) circulant dans les conducteurs de phase, **caractérisé en ce que**, pour déterminer les valeurs de tension de consigne,
- on calcule le moment d'entrefer de la machine à induction à champs tournants (9) à simuler au moyen de la tension aux bornes de la machine à induction à champs tournants (9) et en utilisant un modèle de la machine à induction à champs tournants (9),
- on applique le moment d'entrefer à un modèle de véhicule et on calcule la vitesse de rotation actuelle de rotor et/ou la position du rotor à l'aide du moment résistant et de la masse d'inertie et, à partir de ces paramètres et en tenant compte de la tension aux bornes, on détermine la force électromotrice (f.e.m) de la machine à induction à champs tournants (9) qui est utilisée comme valeur de tension de consigne.

2. Procédé selon la revendication 1, **caractérisé en ce qu'**au niveau de l'étage final de puissance, au moyen duquel on simule la force électromotrice de la machine à induction à champs tournants (9), il est prévu du côté primaire un circuit intermédiaire à tension continue et du côté secondaire un circuit à courant alternatif et de l'énergie électrique peut ainsi être transférée aussi bien du côté primaire vers le côté secondaire qu'inversement.
